# EUROPEAN PATENT SPECIFICATION

(11) **EP 3 758 503 B1**
(45) Date of publication and mention of the grant of the patent: **03.01.2024**
(21) Application number: 19715585.6
(22) Date of filing: 04.03.2019
(51) Int. Cl.: A23G 9/08, A23G 9/12, A23G 9/22

(54) **EVAPORATOR DEVICE AND MACHINE FOR THE PRODUCTION OF ICE CREAM**
VERDAMPFERVORRICHTUNG UND MASCHINE ZUR HERSTELLUNG VON SPEISEEIS
DISPOSITIF ÉVAPORATEUR ET MACHINE POUR LA PRODUCTION DE CRÈME GLACÉE

(30) Priority: 02.03.2018 IT 201800003202
(43) Date of publication of application: 06.01.2021
(73) Proprietor: De' Longhi Appliances S.r.l. Con Unico Socio, 31100 Treviso (IT)
(72) Inventor: DE' LONGHI, Giuseppe, 31100 TREVISO (IT); BELLOMARE, Filippo, 31100 TREVISO (IT); BENEDETTI, Alessandro, 31100 TREVISO (IT); MORO, Andrea, 31100 TREVISO (IT)
(74) Representative: Petraz, Gilberto Luigi
(86) International application number: PCT/IT2019/050047
(87) International publication number: WO 2019/167098

(56) References cited:
- EP-A1- 1 396 195
- WO-A1-2015/181711
- WO-A1-2016/092486
- US-A- 4 429 549
- US-A- 4 838 702

## Description

### FIELD OF THE INVENTION

The present invention concerns an evaporator device for a cooling circuit, suitable to be used, for example, in machines for the production of domestic and/or professional ice cream, machines for preparing creams, coolers for food products, or more generally for cooling more or less dense liquid or creamy products.

A preferred embodiment of the invention concerns a machine for the production of ice cream comprising the evaporator device.

### BACKGROUND OF THE INVENTION

Substantially automatic machines for the production of ice cream in domestic and/or professional environments are known.

Known machines generally comprise a container, or tub, for the ingredients necessary to prepare the ice cream, generally axially perforated, inside which a mixing device is disposed whose axial shaft is made to rotate by a motorized drive mechanism to mix the ingredients during the ice cream production process.

The machine also comprises a support body defining a housing compartment in which the container is inserted.

The support body generally contains at least part of the cooling circuit inside, by means of which the walls of the container, and therefore the ingredients inside it, are brought to the temperature suitable to make the ice cream.

A mixture and/or the ingredients necessary for the production of ice cream, and a liquid, for example water, milk or other are disposed inside the container.

The ingredients, once inserted, begin to cool and are mixed and homogenized by the mixing device.

The machine can also comprise a timing mechanism to set and/or pre-memorize the mixing times necessary to obtain the production of the ice cream according to the methods required by the type of preparation.

The mixing of the mixture and the liquid, together with the low temperature induced by the cooled walls, promote the reaction to make the ice-cream until it is ready for consumption.

The cooling circuit normally comprises an evaporator device, a condenser, a compressor and an expansion valve, through which a heat-carrying fluid flows, which is made to condense and evaporate cyclically.

Generally the evaporator device surrounds from the outside the walls of the container of the ingredients for the production of the ice cream, so as to subtract heat from it and determine the heat transmission through which the temperature of the ingredients is lowered to the desired value.

In applications in the domestic sector, it is necessary for the evaporators to develop a high cooling capacity given the small sizes of the components.

In this context, coil type evaporators are known, inside which a heat exchange fluid, for example a cooling gas, circulates. These known coil type evaporators generally define a positioning seating for the container with the ingredients of the ice cream to be produced.

For example, evaporators are known comprising a support casing suitable to accommodate the container for the ice cream, and a coil in which a heat-carrying fluid flows. The coil is generally wound in spirals around the external surface of the support casing, and is attached thereto by welding or brazing.

However, the brazing process involves some critical factors that can compromise the heat exchange between the coolant and the compound to be cooled; consequently, the performance of the machine is reduced, with inevitable lengthening of the preparation time of the ice cream.

In fact, due to the brazing operations there can be deformations of the coil and narrowing in the passage section of the coolant with consequent risk of obstructions.

Furthermore, due to the high temperatures that are generally reached during the welding/brazing processes, deformations can also occur in the support casing and, consequently, it can be necessary to discard the product and make it again, with consequent losses, both economic, and of time. In fact, these deformations could compromise the heat exchange both between the coil and the support casing, and between the support casing and the container for the ingredients, resulting in an inefficient evaporator.

A non-uniform brazing can also lead to the formation of points of the coil that are less in contact than others with the walls of the container, lowering the performances in terms of heat exchange.

Furthermore, a discontinuity of contact proves inevitable between the spirals and the support casing, due to which empty spaces form between one spiral/wall contact point and the adjacent one, which can create considerable heat dispersion.

To try to reduce such problems of heat dispersion, solutions are known which provide to give a flattened shape to the spirals in order to increase the contact surfaces and/or to insert a filling material with high heat conductivity between the adjacent spirals to fill the empty spaces.

These known solutions, however, which require a plurality of operations and working steps, are not always entirely satisfactory.

These problems generate the need to optimize as much as possible the efficiency of the heat exchange that takes place between the evaporator and the container disposed in the tub, in particular for domestic-type machines for the production of ice cream.

It should also be noted that such evaporators, in order to optimize the heat exchange properties, are generally made of aluminum or similar materials, and this causes problems in particular in the welding of several spirals and/or in the production step.

WO 2016/092486 describes a machine for the production of ice cream comprising a support casing on the smooth external wall of which a coiled evaporator element, the spirals of which have a flattened section, is wound. After the application of the coiled pipe, the empty spaces between one spiral and the other are filled with filling material.

WO 2015/181711 describes a machine for the production of ice cream in which the support casing has helicoidal grooves which define circulation channels for the cooling fluid.

One purpose of the present invention is to produce an evaporator device which overcomes the disadvantages of known evaporators and which allows to effectively increase the heat exchange between the heat-carrying fluid flowing in the spirals and the ingredients to be cooled.

Another purpose of the present invention is to produce an evaporator device which allows a uniform heat exchange between the heat-carrying fluid and the ingredients to be cooled.

Another purpose of the present invention is to produce an evaporator device which is economical and simple to produce, and does not require particular and complex working steps.

Another purpose of the present invention is to produce a machine for the production of ice cream which has high efficiency and reduces the preparation time of the ice cream compared to the machines of known solutions.

The Applicant has devised, tested and embodied the present invention to overcome the shortcomings of the state of the art and to obtain these and other purposes and advantages.

### SUMMARY OF THE INVENTION

The present invention is set forth and characterized in the independent claims, while the dependent claims define preferred embodiments of the invention.

The invention described here concerns an evaporator device for a cooling circuit, usable, for example, in machines for the production of ice cream, machines for the preparation of creams, coolers for food products, or in general for cooling more or less dense liquid or creamy products.

In accordance with the above purposes, an evaporator device according to the invention is defined in appended claim 1 and comprises a support casing and a coiled pipe, inside which a heat-carrying fluid flows, wound in a spiral around the support casing.

According to the invention, the support casing comprises a lateral wall delimited by a bottom edge and an upper edge.

According to some embodiments, the bottom edge and the upper edge are circular in shape. Furthermore, the support casing can have a cylindrical section shape, or a truncated cone shape with a more or less accentuated taper.

According to the invention, the support casing is provided, on its external surface, with a helicoidal groove made in the thickness of the lateral wall, suitable to accommodate therein at least part of the coiled pipe so as to position it in a precise manner in a desired position defined around the support casing, without needing to perform welding or brazing operations.

According to the invention, the groove has shape and sizes such as to accommodate therein at least one transverse portion of the coiled pipe, guaranteeing a good adherence between the external surface of the coiled pipe and the support casing.

According to the invention, the groove defines a plurality of housing seatings that develop continuously one after the other, each suitable to house therein a spiral of the coiled pipe.

According to the invention, the groove develops in a helical shape in the wall of the support casing, so as to allow to position the spirals therein without creating tensions or deformations in the spirals themselves.

According to some embodiments, the evaporator device comprises clamping members configured to clamp and attach the coiled pipe and the support casing stably with respect to each other.

According to some embodiments, the clamping members are preferably of the removable type.

In this way, the spirals remain tightly wound around the support casing, and possible loosening of the spirals is avoided, which could lead to a reduction in the efficiency of the heat exchange of the evaporator.

According to some embodiments, two attachment members are provided, positioned in correspondence or in proximity to the bottom edge and the upper edge of the support casing, each suitable to clamp one end of the coiled pipe, that is, at the beginning of the first spiral and at the end of the last spiral, so as not to interfere with the positioning of the spirals with respect to the support casing and guarantee the maximum possible contact between them.

According to some embodiments, the lateral wall of the support casing can have a constant thickness along its development, at least in the portion not affected by the groove.

According to some embodiments, the groove develops in the lateral wall with constant depth along its development.

According to other embodiments, the groove has a semi-circular shape in section, of a size correlated to the diameter of the coil, so as to guarantee a high surface contact between the coil and the support casing.

According to some embodiments, the radius of the section of the coiled pipe and the radius of curvature of the groove are substantially the same so that the coiled pipe adheres as closely as possible to the lateral wall of the support casing.

According to possible solutions, the depth of the groove corresponds to about half the size of the cross section of the pipe. In this way, unlike state-of-the art solutions, in which between the coil and the support casing, or container, there is only a single point of contact, or in any case limited to a reduced portion of the external surface of the coiled pipe, the invention obtains a heat exchange surface which corresponds to about half of the usable lateral external surface of the pipe, considerably increasing the efficiency of the heat transfer between it and the support casing.

According to a variant, the radius of the groove is slightly smaller than the radius of the coiled pipe, so that the positioning of the coiled pipe happens with mechanical interference, by exploiting the deformation of the material of the coiled pipe.

According to some embodiments, adjacent housing seatings are respectively defined and distanced by portions of the lateral wall that define crests that extend toward the outside, and that have a shape mating with that of the pipe.

In this way, as well as guaranteeing a precise positioning of the spirals with respect to the support casing, the contact surface between them is increased and the formation of empty spaces and therefore the need to insert filling materials therein is avoided.

According to other embodiments, the support casing can have a truncated cone shape, suitable to couple with a mating container with a truncated cone shape, so as to guarantee a same-shape coupling that increases the heat exchange efficiency.

The evaporator device according to the invention, thanks to its conformation, allows to considerably increase the heat exchange efficiency compared with known evaporator devices, allowing to considerably reduce the preparation times of the ice cream, reducing them by up to half with respect to those allowed by known solutions.

Furthermore, the evaporator device can be made in a simple manner, simply by wedging the pipe in the groove, possibly deforming it slightly, so as to make it adhere as closely as possible to the wall of the support casing, without needing to perform brazing and welding operations, avoiding the inconveniences these entail.

Embodiments described here also concern a machine for the production of ice cream comprising the evaporator device according to the invention.

### BRIEF DESCRIPTION OF THE DRAWINGS

These and other characteristics of the present invention will become apparent from the following description of some embodiments, given as a non-restrictive example with reference to the attached drawings wherein:
- fig. 1 is a schematic view of a machine for the production of ice cream according to embodiments described here;
- fig. 2 is a three-dimensional view of an evaporator device usable in the machine of fig. 1 according to some embodiments of the present invention;
- fig. 3 is a section view of the evaporator device of fig. 2;
- fig. 4 is a detailed view of fig. 3.

To facilitate comprehension, the same reference numbers have been used, where possible, to identify identical common elements in the drawings. It is understood that elements and characteristics of one embodiment can conveniently be incorporated into other embodiments without further clarifications.

### DETAILED DESCRIPTION OF SOME EMBODIMENTS

We will now refer in detail to the various embodiments of the present invention, of which one or more examples are shown in the attached drawings. Each example is supplied by way of illustration of the invention and shall not be understood as a limitation thereof.

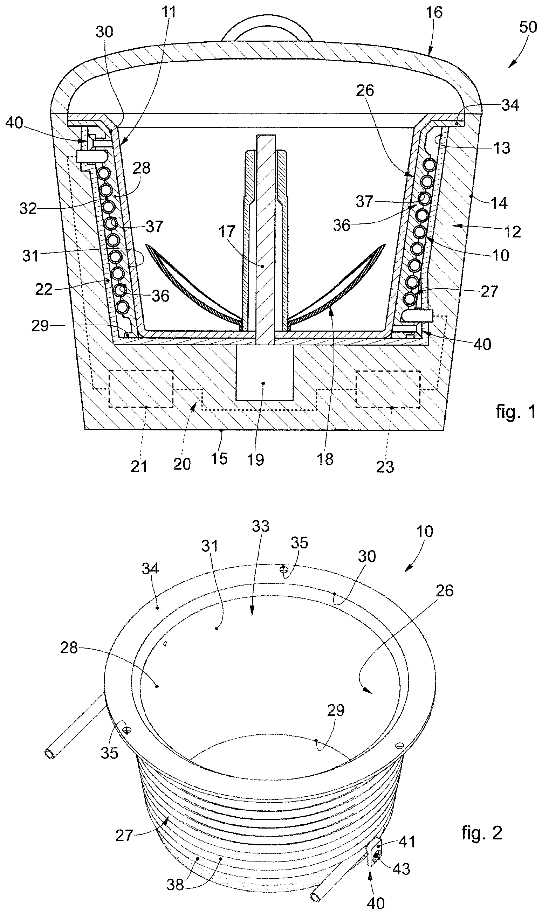

Embodiments described here concern an evaporator device 10 for a cooling circuit 20, usable, for example in a machine for the production of ice cream 50, shown schematically in fig. 1, or in machines for the preparation of creams, coolers for food products, or in general for cooling more or less dense liquid or creamy products.

According to some embodiments, the machine 50 for the production of ice cream can comprise a support body 12 hollow inside and defining a housing compartment 13 suitable to contain a container 11, or tub, to contain the ingredients or the ice cream during its preparation.

The support body 12 can have a box-like shape, cylindrical or conical, and can be made of heat-insulating material.

The support body 12 is provided with an external wall 14 which can substantially delimit its lateral size, and with a bottom wall 15.

According to some embodiments, the machine 50 for the production of ice cream can also comprise a covering element 16 associated with the support body 12 and suitable to cover the support body 12 and the container 11 during the preparation of the ice cream.

According to some embodiments, the machine 50 for the production of ice cream also comprises a mixing device 18 configured to mix the ingredients during the ice cream preparation process, disposed, during use, inside the container 11.

According to some embodiments, the bottom wall 15 can have a hole for the passage of a drive shaft 17 connected to a drive member 19 to make the mixing device 18 rotate.

According to some embodiments, the support body 12 can be provided with an insulation casing 22 suitable to insulate the housing compartment 13 with respect to the support body 12.

The insulation casing 22 can have a shape mating with the shape of the housing compartment 13.

According to some embodiments, the machine to prepare ice cream comprises the cooling circuit 20 disposed at least partly inside the support body 12 and configured to cool the ice cream in the container 11 disposed in the housing compartment 13.

The cooling circuit 20 can be, for example, a refrigerating machine which exploits, in a known way, the heat exchanges deriving from the phase changes of a heat-carrying fluid taking place inside it.

The cooling circuit 20 can comprise a condenser 21, a compressor 23, an expansion member, not shown in the drawings, and an evaporator 10 according to the invention.

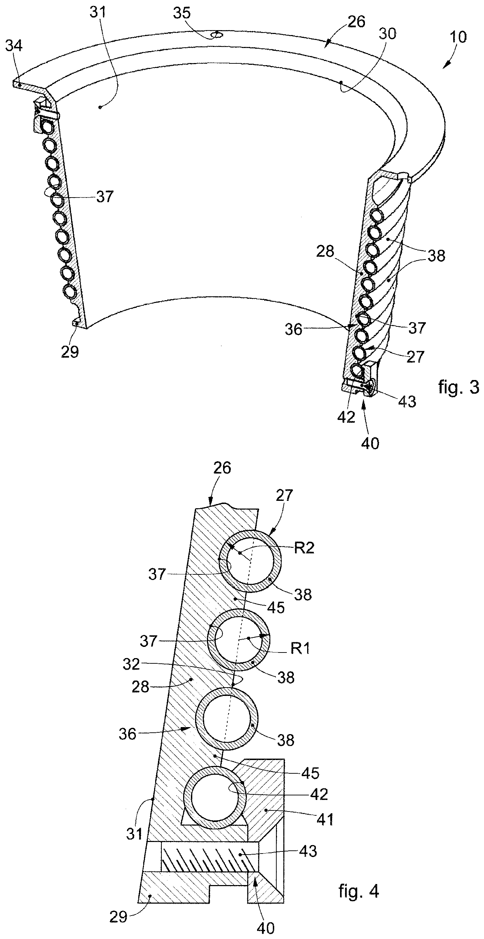

The cooling circuit 20 can be a known type and its configuration and structure are not relevant to the present invention, except for the aspects that will be described in detail below with reference to figs. 1-4.

According to some embodiments, at least part of the cooling circuit 20 cooperates with the housing compartment 13.

According to some embodiments, the evaporator 10 is disposed, during use, inside the housing compartment 13, between the support body 12 and the container 11 for the ingredients.

According to the invention, the evaporator 10 comprises a support casing 26, and a coiled pipe 27, in which the heat-carrying fluid flows, wound around the support casing 26.

According to the invention, the support casing 26 comprises a lateral wall 28 which develops between a bottom edge 29 and an upper edge 30.

According to some embodiments, the lateral wall 28 has an annular shape and defines a housing seating 33 in which, during use, the container 11 is positioned.

The lateral wall 28 comprises an internal surface 31 which, during use, faces an external surface of the container 11, and an external surface 32 facing, during use, toward a lateral wall of the housing compartment 13.

According to some embodiments, the internal surface 31 of the lateral wall 28 is smooth and substantially free of discontinuities, and has a shape mating with the external surface of the container 11 to be cooled.

According to some embodiments, the lateral surfaces of the container 11 and of the evaporator 10 facing each other are made in such a way as to ensure the maximum reciprocal contact between them.

According to possible solutions, the bottom edge 29, during use, can rest on a bottom wall of the housing compartment 13, or be suspended with respect thereto.

According to possible embodiments, the upper edge 30, during use, can be inserted inside the housing compartment 13, or possibly protrude with respect therefrom.

According to variant embodiments, the upper edge 30 can be provided with an annular protrusion 34 which extends toward the outside and is suitable to be rested on the edge of the housing compartment 13.

According to other embodiments, the annular protrusion 34 can have through holes 35 by means of which the support casing 26 can be attached to the support body 12 by means of known attachment members, for example screws, pins, or suchlike.

According to some embodiments, the bottom edge 29 and the upper edge 30 have a circular shape.

According to some embodiments, the support casing 26 can have a truncated cone shape. Providing the use of a container 11 for the ingredients with a mating truncated cone shape allows to obtain a better coupling between the two elements and a better contact between the respective lateral walls, thus increasing the heat exchange efficiency. According to these embodiments, the bottom edge 29 has a smaller diameter than the upper edge 30.

According to possible variants, the support casing 26 can have a cylindrical shape. According to these embodiments, the bottom edge 29 and the upper edge 30 have substantially the same diameters.

According to the invention, the support casing 26 is provided, on its external surface 32, with a groove 36 made in the thickness of the lateral wall 28, having a shape and size correlated to those of the coiled pipe 27.

The groove 36 in particular is configured to accommodate at least one transverse portion of the pipe 27 so as to position it precisely in contact with the lateral wall 32, in a desired and defined position around the support casing 26, without needing to perform welding or brazing operations.

According to the invention, the groove 36 develops in a helicoidal form in the lateral wall 28 of the support casing 26, so as to facilitate the winding and positioning of the spirals 38 without creating tensions or deformations therein.

According to some embodiments, the groove 36 can have a constant pitch along its development.

According to possible variants, the groove 36 can instead have a variable pitch from the bottom edge 29 toward the upper edge 30, maintaining its shape and transverse size unchanged.

According to some embodiments, the lateral wall 28 of the support casing 26 can have a constant thickness along its development, at least in the portions thereof which are not affected by the groove 36.

According to the invention, the groove 36 defines a plurality of adjacent and contiguous housing seatings 37 which develop continuously one after the other, each suitable to house therein a spiral 38 of the coiled pipe 27.

The groove 36 in particular develops between a lower zone located in correspondence or in proximity to the bottom edge 29, and an upper zone located in correspondence or in proximity to the upper edge 30, so that the housing seatings 37 are disposed at least partly substantially parallel to each other along the development of the lateral wall 28 between the lower 29 and upper 30 edges.

According to possible solutions, the spirals 38 can be wedged into the housing seating 37, or positioned in a stable manner therein by same-shape coupling so as to create a good adherence between the coiled pipe 27 and the support casing 26, guaranteeing high efficiency of the heat exchange.

According to some embodiments, the groove 34 develops in the lateral wall 28 with constant depth, so that all the spirals 36 of the pipe 27 are at the same distance from the internal surface 31 of the lateral wall 28.

According to other embodiments, the groove 36 has in section a shape mating with the shape of the coiled pipe 27 so as to guarantee a high surface contact of the coiled pipe 27 and the support casing 26.

According to some embodiments, the pipe 27 can have a circular shaped section, and the groove 36 can have in section a semi-circular shape, with a size correlated to the coiled pipe 27.

According to some embodiments, the section of the pipe 27 can have a first radius R1 and the groove 36 can follow a second radius of curvature R2 with a size correlated to the first radius R1.

According to some embodiments, the first radius R1 and the second radius R2 can be substantially the same.

According to possible variants it can be provided that the first radius R1 is slightly larger than the second radius R2, for example between 1% and 10% larger than the second radius R2, and that the coiled pipe 27 can slightly deform to be inserted into the groove 36.

In this way it is possible to obtain a coupling by interference which guarantees a stable and lasting positioning of the coiled pipe 27 in the groove 36.

According to some embodiments, the groove 36 has a size and depth such as to accommodate at least 20% of the cross section of the coiled pipe 27, preferably at least 30%.

According to other embodiments, the groove 36 has a size and depth such as to accommodate about half of the section of the coiled pipe 27, that is, at least 40% or 50% of the section of the coiled pipe 27, further increasing the heat exchange surface between the latter and the support casing 26.

According to possible solutions, the groove 36 can be made in such a way that between the adjacent housing seatings 37 there are crests 45 which extend toward the outside, and which separate adjacent spirals of the coiled pipe 27 from each other.

In this way, as well as ensuring a precise positioning of the spirals 38 with respect to the support casing 26 and increasing the contact and heat exchange surface between them, the formation of empty spaces is avoided, which can generate heat dispersion and therefore the need to insert filling materials therein.

Furthermore, as the crests 45 between the spirals 38 are made in a single body with the support casing 26 and with the same material, a uniform distribution and exchange of heat between them and the heat-carrying fluid flowing in the pipe 27 are guaranteed.

According to some embodiments, the evaporator device 10 comprises clamping members 40 configured to clamp the pipe 27 and the support casing 26 stably with respect to each other.

According to some embodiments, the clamping members 40 can be positioned in correspondence or in proximity to the bottom edge 29 and the upper edge 30 of the lateral wall 28.

In this way the spirals 36 remain tightly wound around the support casing 26, preventing possible loosening of the spirals 38 which could lead to a reduction of the heat exchange efficiency between the heat-carrying fluid flowing therein and the support casing 26.

According to some embodiments, two clamping members 40 are provided, each at one end 27a, 27b of the pipe 27, that is, at the beginning of the first spiral 38 and at the end of the last spiral 38, so as not to interfere with the positioning of the spirals 38 with respect to the support casing 26 and guarantee the maximum possible contact between them along the entire development of the groove 36.

According to some embodiments, the clamping members 40 can comprise an abutment dowel 41 provided with an abutment surface 42 suitable to be put in contact with the pipe 27, and an attachment member 43 suitable to attach the abutment dowel 41 in a stable manner to the support casing 26.

According to possible embodiments, the abutment surface 42 can have a conformation mating with the shape of the external surface of the pipe 27, so as to guarantee a better reciprocal coupling between the two elements.

According to other embodiments, the clamping members 40 can be chosen, for example, from screws, pins, plugs, or other similar or comparable elements.

According to other embodiments, not shown, clamping members 40 of a different type can be provided, for example snap-in, or bayonet, or similar, in any case suitable to prevent a loosening of the spirals 38 and therefore a distancing of the pipe 27 from the support casing 26.

Embodiments described here, outside of the subject-matter of the claims, also concern a method to make an evaporator device 10 which provides to:
- make a support casing 26 having a lateral wall 28 defined by a bottom edge 29 and an upper edge 30, and provided with a groove 36 made in the thickness of the lateral wall 28 which develops continuously between a lower zone located in correspondence or in proximity to the bottom edge 29, and an upper zone located in correspondence or in proximity to the upper edge 30 of the lateral wall 28;
- wind a coiled pipe 27, inside which, during use, a heat-carrying fluid can flow, around the support casing 26, inserting and wedging the pipe 27 at least for a transverse portion thereof inside the groove 36;
- clamp the coiled pipe 27 to the support casing 26 so as to prevent relative movements between them and guarantee the efficiency of the evaporator device 10 over time.

According to some embodiments, outside the subject-matter of the claims, the method can provide to slightly deform the coiled pipe 27 to insert it and wedge it into the groove 36.

According to some embodiments, outside the subject-matter of the claims, the method can provide to clamp a first end 27a of the coiled pipe 27 after inserting it and wedging it in a first housing seating 37 of the groove 36 located in correspondence or proximity to one of either the bottom edge 29 or the upper edge 30, to wind the coiled pipe 27, inserting and wedging the spirals 38 in the adjacent and contiguous housing seatings 37, and finally to clamp a second end 27b of the coiled pipe 27 in a last housing seating 37 located in correspondence or proximity of the other of either the upper edge 30 or the bottom edge 29.

## Claims

1. Evaporator device for a cooling circuit (20), comprising a support casing (26) and a coiled pipe (27) inside which, during use, a heat-carrying fluid can flow, said pipe (27) winding around the support casing (26), wherein said support casing (26) comprises a lateral wall (28), which develops between a bottom edge (29) and an upper edge (30), **characterized in that** said lateral wall (28) is provided, on its external surface (32), with a helicoidal groove (36) made in its thickness, with shape and sizes correlated to those of said coiled pipe (27) so that it can accommodate at least one transverse portion of said coiled pipe (27) in contact with said lateral wall (28), wherein said groove (36) defines a plurality of adjacent and contiguous housing seatings (37) that develop continuously one after the other, each suitable to house therein a spiral (38) of said coiled pipe (27) and respectively defined and distanced by portions of said lateral wall (28) that define crests (45) that extend toward the outside, and that have a shape mating with that of said coiled pipe (27).

2. Evaporator device as in claim 1, **characterized in that** said coiled pipe (27) has a circular cross section with a first radius (R1) and said groove (36) has a curvature with a second radius (R2), of a size mating with said first radius (R1).

3. Evaporator device as in claim 1, **characterized in that** said coiled pipe (27) has a circular cross section with a first radius (R1) and said groove (36) has a curvature with a second radius (R2), wherein said first radius (R1) is from 1% to 10% larger than said second radius (R2).

4. Evaporator device as in any claim hereinbefore, **characterized in that** the depth of said groove (36) in said lateral wall (28) corresponds to half the size of the cross section of said pipe (27).

5. Evaporator device as in any claim hereinbefore, **characterized in that** said support casing (26) has a truncated cone shape.

6. Evaporator device as in any claim hereinbefore, **characterized in that** it comprises clamping members (40) of the removable type configured to clamp and attach said coiled pipe (27) and said support casing (26) stably with respect to each other.

7. Evaporator device as in claim 6, **characterized in that** two clamping members (40) are provided positioned in correspondence or in proximity to the bottom edge (29) and the upper edge (30) of said support casing (26), each suitable to clamp one end (27a, 27b) of said coiled pipe (27).

8. Machine for the production of ice cream or for cooling food products, comprising a support body (12) defining a housing compartment (13) suitable to contain a container (11) to contain the ingredients for the preparation of the ice cream or the food products to be cooled, and a cooling circuit (20) disposed at last partly inside said support body (12) and configured to cool the ingredients or the products in the container (11) disposed in said housing compartment (13), **characterized in that** said cooling circuit (20) comprises an evaporator device (10) as in any of the previous claims from 1 to 7.

## Patentansprüche

1. Verdampfervorrichtung für einen Kühlkreislauf (20), umfassend ein Trägergehäuse (26) und ein gewickeltes Rohr (27), in dem im Gebrauch ein wärmetragendes Fluid strömen kann, wobei das Rohr (27) um das Trägergehäuse (26) gewickelt ist, wobei das Trägergehäuse (26) eine Seitenwand (28) aufweist, die sich zwischen einem unteren Rand (29) und einem oberen Rand (30) entwickelt, dadurch gel<ennzeichnet, dass die Seitenwand (28) an ihrer Außenfläche (32) mit einer in ihrer Dicke ausgebildeten schraubenförmigen Nut (36) versehen ist, deren Form und Abmessungen mit denen des gewickelten Rohrs (27) korrelieren, so dass sie mindestens einen Querabschnitt des gewickelten Rohrs (27) in Kontakt mit der Seitenwand (28) aufnehmen kann, wobei die Nut (36) eine Vielzahl von benachbarten und zusammenhängenden Aufnahmen (37) definiert, die sich kontinuierlich nacheinander entwickeln und jeweils geeignet sind, eine Spirale (38) des gewickelten Rohrs (27) aufzunehmen und jeweils durch Abschnitte der Seitenwand (28) definiert und beabstandet sind, die Scheitelpunkte (45) definieren, die sich nach außen erstrecken und eine Form haben, die zu der des gewickelten Rohrs (27) passt.

2. Verdampfervorrichtung nach Anspruch 1, **dadurch gekennzeichnet, dass** das gewickelte Rohr (27) einen kreisförmigen Querschnitt mit einem ersten Radius (R1) aufweist, und die Nut (36) eine Krümmung mit einem zweiten Radius (R2) aufweist, dessen Größe mit dem ersten Radius (R1) übereinstimmt.

3. Verdampfervorrichtung nach Anspruch 1, **dadurch gekennzeichnet, dass** das gewickelte Rohr (27) einen kreisförmigen Querschnitt mit einem ersten Radius (R1) aufweist, und die Nut (36) eine Krümmung mit einem zweiten Radius (R2) aufweist, wobei der erste Radius (R1) um 1 % bis 10 % größer ist als der zweite Radius (R2).

4. Verdampfervorrichtung nach irgendeinem der vorhergehenden Ansprüche, **dadurch gekennzeichnet, dass** die Tiefe der Nut (36) in der Seitenwand (28) der halben Größe des Querschnitts des Rohrs (27) entspricht.

5. Verdampfervorrichtung nach irgendeinem der vorhergehenden Ansprüche, **dadurch gekennzeichnet, dass** das Trägergehäuse (26) die Form eines Kegelstumpfes hat.

6. Verdampfervorrichtung nach einem der vorhergehenden Ansprüche, **dadurch gekennzeichnet, dass** sie Klemmelemente (40) des abnehmbaren Typs umfasst, die so konfiguriert sind, dass sie das gewickelte Rohr (27) und das Trägergehäuse (26) stabil in Bezug zueinander einklemmen und befestigen.

7. Verdampfervorrichtung nach Anspruch 6, **dadurch gekennzeichnet, dass** zwei Klemmelemente (40) vorgesehen sind, die in Übereinstimmung mit dem unteren Rand (29) und dem oberen Rand (30) oder in der Nähe des unteren Randes (29) und des oberen Randes (30) des Trägergehäuses (26) positioniert sind und jeweils geeignet sind, ein Ende (27a, 27b) des gewickelten Rohres (27) einzuklemmen.

8. Maschine zur Herstellung von Speiseeis oder zum Kühlen von Nahrungsmitteln, umfassend einen Trägerkörper (12), der einen Gehäuseraum (13) definiert, der geeignet ist, einen Behälter (11) aufzunehmen, der die Zutaten für die Herstellung des Speiseeises oder die zu kühlenden Nahrungsmittel enthält, und einen Kühlkreislauf (20), der zumindest teilweise im Inneren des Trägerkörpers (12) angeordnet ist und so konfiguriert ist, dass er die Zutaten oder die Produkte in dem in dem Gehäuseraum (13) angeordneten Behälter (11) kühlt, **dadurch gekennzeichnet, dass** der Kühlkreislauf (20) eine Verdampfervorrichtung (10) gemäß irgendeinem der vorhergehenden Ansprüche 1 bis 7 umfasst.

## Revendications

1. Dispositif évaporateur pour un circuit de refroidissement (20), comprenant un boîtier de support (26) et un tuyau hélicoïdal (27) à l'intérieur duquel, en utilisation, un fluide caloporteur peut s'écouler, ledit tuyau (27) s'enroulant autour du boîtier de support (26), dans lequel ledit boîtier de support (26) comprend une paroi latérale (28), qui se développe entre un bord inférieur (29) et un bord supérieur (30), **caractérisé en ce que** ladite paroi latérale (28) est pourvue, sur sa surface externe (32), d'une rainure hélicoïdale (36) réalisée dans son épaisseur, dont la forme et les dimensions sont corrélées à celles dudit tuyau hélicoïdal (27) afin qu'elle puisse recevoir au moins une partie transversale dudit tuyau hélicoïdal (27) en contact avec ladite paroi latérale (28), dans lequel ladite rainure (36) définit une pluralité de sièges de logement adjacents et contigus (37) qui se développent en continu les uns après les autres, chacun approprié pour y loger une spirale (38) dudit tuyau hélicoïdal (27) et respectivement définis et espacés par des parties de ladite paroi latérale (28) qui définissent des crêtes (45) qui s'étendent vers l'extérieur, et qui ont une forme correspondant à celle dudit tuyau hélicoïdal (27).

2. Dispositif évaporateur selon la revendication 1, **caractérisé en ce que** ledit tuyau hélicoïdal (27) présente une section transversale circulaire avec un premier rayon (R1) et ladite rainure (36) présente une courbure avec un second rayon (R2), d'une taille correspondant audit premier rayon (R1).

3. Dispositif évaporateur selon la revendication 1, **caractérisé en ce que** ledit tuyau hélicoïdal (27) présente une section transversale circulaire avec un premier rayon (R1) et ladite rainure (36) présente une courbure avec un second rayon (R2), dans lequel ledit premier rayon (R1) est de 1 % à 10 % plus grand que ledit second rayon (R2).

4. Dispositif évaporateur selon l'une quelconque des revendications précédentes, **caractérisé en ce que** la profondeur de ladite rainure (36) dans ladite paroi latérale (28) correspond à la moitié de la taille de la section transversale dudit tuyau (27).

5. Dispositif évaporateur selon l'une quelconque des revendications précédentes, **caractérisé en ce que** ledit boîtier de support (26) présente une forme tronconique.

6. Dispositif évaporateur selon l'une quelconque des revendications précédentes, **caractérisé en ce qu'**il comprend des éléments de serrage (40) du type amovible configurés pour serrer et fixer ledit tuyau hélicoïdal (27) et ledit boîtier de support (26) de manière stable l'un par rapport à l'autre.

7. Dispositif évaporateur selon la revendication 6, **caractérisé en ce que** deux éléments de serrage (40) sont prévus, positionnés en correspondance ou à proximité du bord inférieur (29) et du bord supérieur (30) dudit boîtier de support (26), chacun étant approprié pour serrer une extrémité (27a, 27b) dudit tuyau hélicoïdal (27).

8. Machine pour la production de crème glacée ou pour refroidir des produits alimentaires, comprenant un corps de support (12) définissant un compartiment de logement (13) approprié pour contenir un contenant (11) destiné à contenir les ingrédients pour la préparation de la crème glacée ou des produits alimentaires à refroidir, et un circuit de refroidissement (20) disposé au moins partiellement à l'intérieur dudit corps de support (12) et configuré pour refroidir les ingrédients ou les produits dans le contenant (11) disposé dans ledit compartiment de logement (13), **caractérisée en ce que** ledit circuit de refroidissement (20) comprend un dispositif évaporateur (10) selon l'une quelconque des revendications précédentes 1 à 7.
